# EUROPEAN PATENT APPLICATION

(11) **EP 4 082 507 A1**
(43) Date of publication of application: **02.11.2022**
(21) Application number: 20904564.0
(22) Date of filing: 23.12.2020
(51) Int. Cl.: A61H 3/04

(54) **ELECTRICALLY CONTROLLED VEHICLE**

(30) Priority: 25.12.2019 JP 2019235275
(71) Applicant: Nabtesco Corporation, Tokyo 102-0093 (JP)
(72) Inventor: HASHIMOTO Hiroaki, Tokyo 102-0093 (JP)
(74) Representative: Grünecker Patent- und Rechtsanwälte PartG mbB
(86) International application number: PCT/JP2020/048149
(87) International publication number: WO 2021/132324

(57) **Abstract**

Provided is an electrically controlled vehicle which can detect the fall of a user and improve safety by a novel solution. A walker 100 includes: brakes; a velocity sensor; an acceleration sensor; a brake control unit configured to electrically control the brakes to enhance braking force when acceleration detected by the acceleration sensor is greater than or equal to a threshold; and a threshold changing unit configured to change the threshold according to the velocity. This configuration allows a threshold for the acceleration to be changed according to the velocity, and the safety can be improved by detecting the fall of the user.

## Description

### [TECHNICAL FIELD]

The present invention relates to electrically controlled vehicles.

### [BACKGROUND ART]

In the related art, electrically controlled vehicles for assisting the walking of elderly people and people with weak leg strength are known (see, for example, Patent Literature 1). An electrically controlled vehicle is used together with a pedestrian (user) at the time of walking. Some electrically controlled vehicles use a torque brake of a motor to stop the electrically controlled vehicles when the user is about to fall, thereby preventing the user from falling.

[Patent Literature 1] Japanese Patent Application Publication NO. 2016-187485

### [SUMMARY OF INVENTION]

### [TECHNICAL PROBLEM]

As an example of a means of detecting a user's fall, there is a technology in which the distance between the user and an electrically controlled vehicle is monitored over time using a distance measurement sensor, and when the distance between the user and the electrically controlled vehicle reaches a certain level or more, it is determined that a fall has occurred and a brake is activated. However, only the measurement of the distance between the user and the electrically controlled vehicle results in a possibility that the brake will be activated when, for example, clothing such as a coat or necktie blocks the distance measurement sensor, the user's body deviates from a detection region of the distance measurement sensor for reasons other than a fall, or the distance measurement sensor gets wet or dirty. Therefore, there is still room for improvement in the technology for detecting a user's fall.

A purpose of the present invention is to provide an electrically controlled vehicle that can detect the fall of a user and improve safety by a novel solution.

### [SOLUTION TO PROBLEM]

One embodiment of the present invention includes: an acceleration sensor; brakes; a brake control unit configured to electrically control the brakes to enhance braking force when acceleration detected by the acceleration sensor is greater than or equal to a threshold; and a threshold changing unit configured to change the threshold according to the velocity.

### [BRIEF DESCRIPTION OF DRAWINGS]

FIG. 1 is a perspective view of a walker according to one embodiment of the present invention;
FIG. 2 is a lateral view of the walker;
FIG. 3 is a block diagram of a control system of the walker;
FIG. 4 is a graph showing the relationship between the threshold of a fall brake and the velocity;
FIG. 5 is a graph showing change in acceleration over time when the user is about to fall; and
FIG. 6 is a graph showing the relationship between braking force and time when the fall brake is activated.

### [DESCRIPTION OF EMBODIMENTS]

Hereinafter, an electrically controlled vehicle according to an embodiment of the present invention will be described with reference to the drawings. In the following explanation, the same reference numerals are assigned to the same configurations, and repetitive explanations will be omitted. In the following embodiment, as the electrically controlled vehicle, for example, a walker configured to assist the elderly in walking will be illustrated. However, as the electrically controlled vehicle, at least any vehicle whose brake is controlled by electric power can be adopted. The electrically controlled vehicle is driven by rotating the wheels using force input by actions such as pushing by the user to the vehicle as a main power source. Examples of such an electrically controlled vehicle include a wheelchair, a stroller, and a trolley for transporting a load in addition to a walker.

To clarify the following explanations, first an explanation will be given regarding the meaning of terms used in the following explanations. In the present specification, the term "brake" includes two types of brakes: mechanical brakes and electric brakes. A mechanical brake is a brake configured to reduce the rotational speed of the wheel by the braking force of a friction element such as a brake shoe by bringing the friction element into contact with the wheel or axle through operation intentionally performed by the user. An electric brake is a brake configured to reduce the rotational speed of the wheel by braking force by collecting kinetic energy generated by wheel rotation through electrical control without operation intentionally performed by the user. The electric brake also includes a brake configured to rotationally drive the motor in a direction opposite to the normal driving direction to reduce the rotational speed of the wheel. Further, in the present specification, the term "electrically controlled vehicle" means a vehicle equipped with at least an electric brake. Therefore, even if an electric brake is the only element controlled by electricity in the entire vehicle, the vehicle is included in electrically controlled vehicles. In the present specification, a forward direction and a backward direction may be used as terms indicating directions. The forward direction means a direction of advancing the vehicle in a normal use state of the vehicle, and the backward direction means a direction of retracting the vehicle in a normal use state of the vehicle. In the present specification, the terms "*"* angle", "roll angle", and "yaw angle" may also be used as terms that indicate the posture of the vehicle. The pitch angle means an angle around an axis (pitch axis) extending in the vehicle width direction. The roll angle means an angle around an axis (roll axis) extending in the front-rear direction of the vehicle. The yaw angle means an angle around an axis (yaw axis) extending in the vertical direction of the vehicle. Pitching, rolling, and yawing mean rotational motion around the respective corresponding axes. The inclination angle of a road surface means the inclination angle of the surface on which the vehicle is traveling. The inclination angle of the road surface is estimated to be the same as the inclination angle of the vehicle and is indicated by the angle around the pitch axis or the roll axis or by the combination of the angles around the pitch axis and the roll axis.

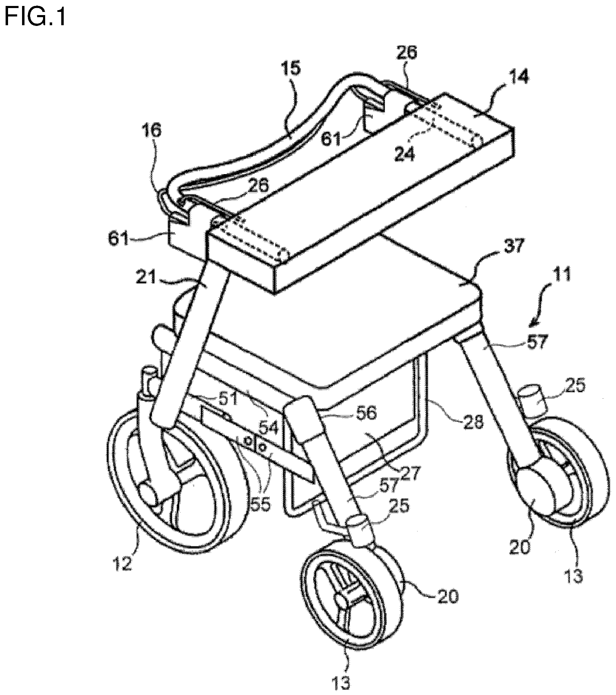

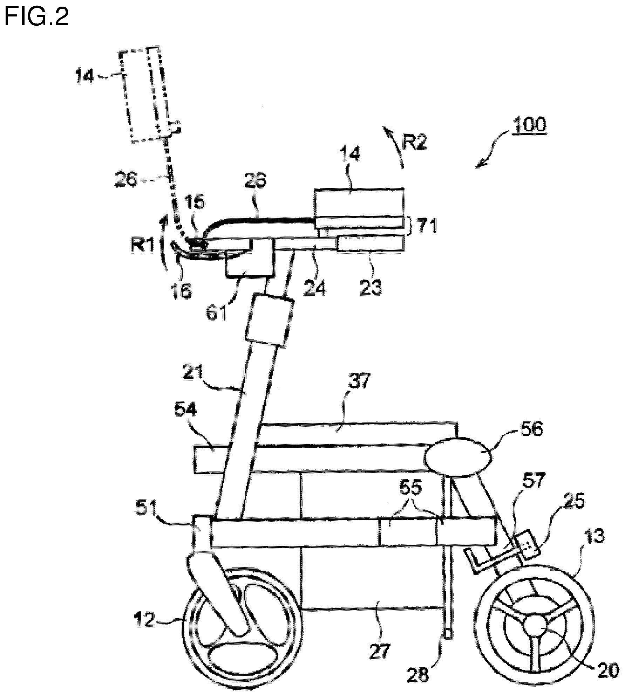

FIG. 1 is a perspective view of a walker according to one embodiment of the present invention. FIG. 2 is a side view of a walker 100 according to FIG. 1. As shown in FIGS. 1 and 2, the walker 100 includes a main body frame 11, a pair of front wheels 12 and a pair of rear wheels 13 provided on the main body frame 11, and a support pad (body support part) 14 provided on the main body frame 11. The walker 100 assists the walking of an elderly person or a person with weak leg strength. When using the walker 100, while putting his/her forearm or elbow on the support pad 14 and applying the weight (load) to the support pad 14, the user applies force to the walker 100 by pushing a handlebar 15 while grasping the handlebar 15 and a brake lever 16 to perform a walking motion. Therefore, the handlebar 15 serves as a receiver configured to receive force from the user, and the walker 100 moves by the force received by the receiver.

The main body frame 11 includes a pair of support frames 21 that are inclined by a predetermined angle from a direction perpendicular to the placement surface of the walker 100. The support frames 21 are formed using pipe-shaped members as an example. A pair of lower frames 51 are being horizontally provided on the lower end side of the support frames 21. A pair of front wheels 12 are being attached to the front end side of the lower frames 51. A pair of link mechanisms 55 are being provided on the rear end side of the lower frames 51.

**A** pair of upper frames 54 are being provided above the pair of lower frames 51. One end side of each of a pair of rear wheel frames 57 is being rotatably connected to the rear end side of each of the upper frames 54 via a shaft 56. A pair of rear wheels 13 are being provided on the other end side of the rear wheel frame 57, respectively.

A pair of handles 24 are being provided at the respective upper ends of the pair of support frames 21. The pair of handles 24 are provided substantially in a horizontal manner with respect to the placement surface of the walker 100. The pair of handles 24 are formed using pipe-shaped members as an example. Each of the pair of handles 24 is being provided with a grip 23 (see FIG. 2) held by the user to stabilize the posture when the user is sitting. Further, on the front side of the pair of handles 24, a pipe-shaped handlebar 15 integral with the handles 24 is being formed. One end of the handlebar 15 is being connected to one of the pair of handles 24, and the other end of the handlebar 15 is being connected to the other handle 24. The handlebar 15 may be formed of a member different from the handles 24.

A pair of brake shoes 25 (omitted in FIG. 1, see FIG. 2) are being provided on the outer circumference of the pair of rear wheels 13. The brake shoes 25 are connected to one end of a brake wire (not shown) arranged in the main body frame 11. The other end of the wire is connected to a wire connection mechanism of a pair of brake units 61 provided on respective sides of the handlebar 15. Although the wire is stored in the main body frame 11, the wire may be provided outside the main body frame such that the wire is visible to the user in appearance.

A brake lever 16 is being arranged in the lower front direction of the handlebar 15 so as to face the handlebar 15. The respective ends of the brake lever 16 are connected to the pair of brake units 61. The respective ends of the brake lever 16 are being attached to the brake units 61 via a biasing means such as a winding spring. The user can apply the mechanical brake by pulling the brake lever 16 toward the user (in the direction of arrow R1 in FIG. 2) by wire action. In other words, the brake shoes 25 can be controlled through the operation of the brake lever 16.

At the time of use, the user pulls the brake lever 16 toward the user (in a direction closer to the handlebar 15) to a brake operating position. The action of the wire connected to the brake lever 16 causes the brake shoes 25 to move such that the brake shoes 25 press the outer circumference of the rear wheels 13. This applies the mechanical brake. When the user releases the brake lever 16, the brake lever 16 returns to the original position (normal position). Along with this, the brake shoes 25 are also separated from the rear wheels 13, and the mechanical brake is released. Further, the brake lever 16 is designed to be able to be lowered in the opposite direction (lower side) of the arrow R1. By lowering the brake lever 16 to a parking position, a parking brake is applied that maintains a state in which the rear wheels 13 are being pressed by the brake shoes 25 via the wire action.

The support pad 14 described above is mounted above the pair of handles 24 and over the pair of handles 24. The support pad 14 is a form of body support configured to support a portion of the user's body. In the present embodiment, a form of use is assumed where the user's forearms, elbows, or both of the forearms and the elbows are supported. However, another form of use where another part of the body, such as the chin, hand, or chest, is supported is also possible.

Between the handles 24 and the support pad 14, a detection mechanism 71 (see FIG. 2) is provided for detecting whether the walker 100 is being used for walking by the user. More specifically, the detection mechanism 71 detects whether a load (weight) is applied to the support pad 14 by the user or whether the user is in contact with the support pad 14.

The shape of the support pad 14 is a horseshoe shape as an example but is not limited to this shape, and the shape may be any other shape. As an example, the support pad 14 is formed by placing a cushion material such as a sponge or a rubber material on a plate material such as a wooden plate or a resin plate and covering these materials with an arbitrary covering material made of resin or cloth. However, the configuration is not limited to this configuration and may be any other configuration.

A pair of arm members 26 are being fixed, each on one end side, to the respective lateral sides of the lower surface of the support pad 14. The arm members 26 are rotatably being attached, each on the other end side, to the outside of the pair of handlebars 15, respectively. When the user pushes (strikes) the support pad 14 upward, the support pad 14 rotates in the direction of an arrow R2 in FIG. 2 and is fixed at a predetermined position (retracting position) (see a virtual line in FIG. 2). A space for accommodating the upper body of the user is secured above a seat 37.

In this state, the user can sit on the seat 37 with the support pad 14 on the back side while holding the pair of grips 23 with both hands. By holding the grips 23, the user can stabilize his/her posture when the user is sitting. In this way, the support pad 14 prevents the user from sitting on the seat 37 of the walker at a position obtained before being pushed up (normal position) and allows the user to sit on the seat 37 of the walker at a position obtained after being pushed up (retracting position).

The configuration in which the user manually pushes up the support pad 14 is shown here. However, as another example, a configuration may be employed where a lock mechanism (not shown) is provided such that the support pad 14 is automatically pushed up by releasing the fixation by the lock mechanism. Alternatively, a configuration may be employed where an electric mechanism (motor or the like) for rotating the arm members 26 is provided such that the support pad 14 is pushed up by operating the electric mechanism through the activation of the switch.

A storage 27 (see FIG. 2) is being provided so as to be suspended between the pair of upper frames 54. The storage 27 has a bag shape with an open upper part and can store baggage inside the storage 27. The storage 27 may be made of resin or fabric. The seat 37 described above is provided as a lid for the storage 27.

Behind the storage 27, a lever 28 extending downward from the pair of upper frames 54 is provided. The lever 28 is located in a position that allows the user to step on the lever 28 with his/her leg. When the user lowers the lever 28, the link mechanisms 55 are folded such that the pair of rear wheel frames 57 and the pair of rear wheels 13 approach the pair of front wheels 12. As a result, the walker 100 can be folded.

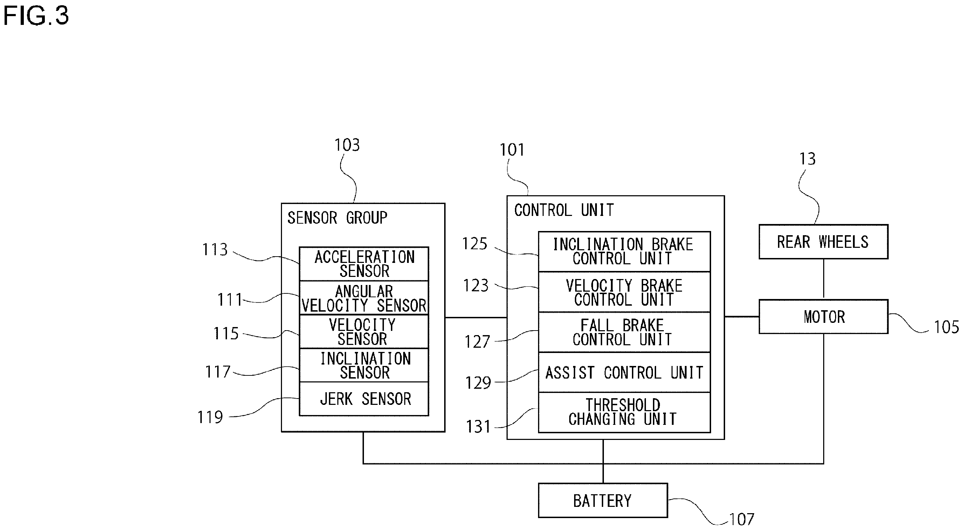

FIG. 3 is a block diagram of a control system. The walker 100 includes a control unit 101, a sensor group 103, a motor 105, and a battery 107. The walker 100 supplies various information detected by the sensor group 103 to the control unit 101. The control unit 101 processes the information supplied by the sensor group 103 to control the motor 105. The control unit 101, the motor 105, the sensor group 103, and the battery 107 may be housed in a single housing and integrally provided with the rear wheels 13 to be controlled. In this case, a housing configured to house the control unit 101, the motor 105, the sensor group 103, and the battery 107 may be attached to each of the pair of rear wheels 13. Of the sensor group 103, a sensor configured to detect the rotational speed of the rear wheels 13 and the motor 105 may be arranged for each of the pair of rear wheels 13, and the remaining control unit 101 and battery 107 may be stored in the storage 27. Also, a housing configured to house the control unit 101, the battery 107, the sensor configured to detect the rotational speed of the rear wheels 13, and a sensor configured to detect an inclination angle may be attached to each of the pair of the rear wheels 13.

### [Motor]

The motor 105 is connected to the axles of the rear wheels 13 and controls the rotational speed of the rear wheels 13 based on control performed by the control unit 101. More specifically, the motor 105 functions as an electric brake configured to suppress the rotational speed of the rear wheels 13. The motor 105 rotates due to the kinetic energy generated by the rotation of the rear wheels 13. The rotation of the motor 105 causes the kinetic energy to be collected and increases the braking force of the rear wheels 13 caused by the motor 105, thereby reducing the rotational speed of the rear wheels 13. The kinetic energy collected by the motor 105 is stored in the battery 107. Therefore, the motor 105 functions as a regenerative or power generation brake. If the battery 107 can be charged using an external power source, it is not necessary to charge the battery 107 by the motor 105, and a brake configured to collect and consume kinetic energy such as an eddy current brake or electromagnetic retarder may be used as an electric brake. A servo motor, a stepping motor, an AC motor, a DC motor, or the like is used as the motor 105 used as a regenerative brake. Also, for example, if the walker 100 has an assist function, the motor 105 may rotate in the direction opposite to the direction in which the walker 100 is advanced so as to produce reverse braking that reduces the rotational speed of the rear wheels 13.

### [Battery]

The battery 107 is electrically connected to the control unit 101 and supplies electric power for the driving of the control unit 101. Further, the battery 107 may be electrically connected to each sensor of the sensor group 103 so as to supply electric power for driving the sensor group 103. As the battery 107, a secondary battery such as a lithium-ion battery or a capacitor (condenser) can be used. The battery 107 may be a battery that is rechargeable using an external power source or may be a battery that is charged using only the electrical energy collected by the motor 105.

### [Sensor group]

The sensor group 103 has single or a plurality of sensors and transmits a detection result from each sensor to the control unit 101. The sensor group 103 includes an angular velocity sensor 111 configured to detect the angular velocity of the vehicle around the pitch, roll, and yaw axes, an acceleration sensor 113 configured to detect the acceleration of the vehicle around the pitch, roll, and yaw axes, and a velocity sensor 115 configured to detect the rotational speed and rotational direction of the rear wheels 13. As the angular velocity sensor 111 and the acceleration sensor 113, a 6-axis inertial sensor in which these two sensors are combined may be used. For example, if there is no need to detect the angular velocity and acceleration around the yaw axis, a 4-axis inertial sensor capable of detecting the angular velocity and acceleration around at least the pitch and roll axes may be used. A Hall element may be used as the velocity sensor 115, or the velocity may be calculated from the back electromotive force of the motor 105. A magnetic field sensor may also be used instead of the acceleration sensor. The detection result from each sensor is transmitted to the control unit 101 as a signal by a wired or wireless method.

The sensor group 103 may also include an inclination sensor 117 configured to detect an inclination angle with respect to the pitch axis of the vehicle or the horizontal plane around the pitch axis. If it is not necessary to detect the roll angle, a sensor capable of detecting the angular velocity around the pitch axis and the acceleration in the direction of the roll axis may be used. In order to detect a pitch angle or rotation around the roll axis, it is sufficient to be able to detect only the acceleration, and the angular velocity is not always necessary. The history or change over time of a detected value from the acceleration sensor 113 may be used to detect the inclination angle or the presence of inclination with respect to the horizontal plane, and in this case, the inclination sensor 117 is not necessary. Further, the sensor group 103 may also include a jerk sensor 119 for detecting jerk. The detected value from the acceleration sensor 113 may be calculated by differentiating the detected value from the acceleration sensor 113 in order to acquire the jerk, and in this case, the jerk sensor 119 is unnecessary. The detected value from the acceleration sensor 113 may be integrated to detect the velocity, and in this case, the velocity sensor 115 is unnecessary. Also, the acceleration in the front-rear direction may be calculated by differentiating the detected value from the velocity sensor 115 without providing the acceleration sensor 113 for detecting the acceleration in the front-rear direction. In this case, second-order differentiation may be performed on the detected value from the velocity sensor 115 in order to calculate the jerk in the front-rear direction. In this way, the acquisition of the velocity, the acceleration, and the jerk can be achieved by using any one of the acceleration sensor 113,the velocity sensor 119, and the jerk sensor 119. Therefore, the velocity sensor 115 can correspond to a velocity acquisition unit and an acceleration acquisition unit in cooperation with the control unit 101, and the acceleration sensor 113 can also correspond to the velocity acquisition unit and acceleration acquisition unit in cooperation with the control unit 101.

### [Traveling resistance estimation unit]

The walker 100 may include a traveling resistance estimation unit 121. The traveling resistance estimation unit 121 estimates the resistance of the road surface on which the walker 100 is traveling. As an example, the traveling resistance estimation unit 121 monitors the acceleration of the walker 100 in the vertical direction over time to estimate the traveling resistance of the road surface. Further, the traveling resistance estimation unit 121 may also capture an image of the traveling road surface and analyze the captured image to estimate the resistance of the road surface.

### [Control unit]

The control unit 101 controls the brake by controlling the motor 105. The control unit 101 is formed by hardware such as a processor configured to perform various arithmetic processing such as a micro processing unit (MPU), a memory configured to store information and instructions, and a temporary memory used for arithmetic operations performed by the processor. The control unit 101 is electrically connected to the battery 107, and electric power for driving each piece of hardware is supplied from the battery 107. The control unit 101 uses the detection result obtained from each sensor to enhance or reduce the braking force caused by the motor 105. More specifically, the control unit 101 calculates the size of the braking force using the detection result obtained from each sensor and transmits a resistance value necessary to generate the braking force to the motor 105, thereby adjusting the strength of the braking force.

The control unit 101 includes a velocity brake control unit 123, an inclination brake control unit 125, and a fall brake control unit 127 configured to generate braking force based on different braking principles under different operating conditions, respectively. In the example in the embodiment, the fall brake control unit 127 functions as a "brake control unit" or a "first brake control unit", and at least one of the inclination brake control unit 125 and the velocity brake control unit 123 functions as a "second brake control unit". The control unit 101 detects various conditions of the walker 100 such as the traveling environment and traveling conditions and generates braking force by the motor 105 according to various braking principles. The velocity brake control unit 123 controls the velocity based on a velocity value that has been input. The inclination brake control unit 125 controls the velocity based on an inclination value of the traveling surface (or the pitch angle of the walker 100) that has been input. The fall brake control unit 127 serving as the "brake control unit" controls the motor 105 based on the acceleration that has been input to prevent the user from falling. If the brake shoes 25 can be controlled electrically by the velocity brake control unit 123, the inclination brake control unit 125, or the fall brake control unit 127, a velocity brake, an inclination brake, and a fall brake may be applied only by the brake shoes 25. If the brake shoes 25 can be controlled electrically by the velocity brake control unit 123, the inclination brake control unit 125, or the fall brake control unit 127, the velocity brake, the inclination brake, and the fall brake may be applied by the combination of the brake shoes 25 and the motor 105.

### [Assist control]

The walker 100 may also include an assist function for assisting in the acceleration of the walker 100. The assist control unit 129 calculates assist force based on the acceleration in the forward direction of the walker 100 detected by the acceleration sensor 113. The assist control unit 129 calculates the assist force to be generated by the motor 105 and controls the motor 105 based on the calculated value. The motor 105 applies the assist force to the rear wheels 13 based on the control performed by the assist control unit 129 to apply driving power to the walker 100. The assist control unit 129 may increase or decrease the assist force based on whether or not there is an upward inclination that is based on a detected value from the pitch angle sensor, an estimated value of traveling resistance obtained by the traveling resistance estimation unit 121, and the like.

Hereinafter, a specific process of controlling the motor 105 by the control unit 101 will be explained. In the following explanation, the operation actively performed by the control unit 101, the velocity brake control unit 123, the inclination brake control unit 125, the fall brake control unit 127, and the assist control unit 129 is achieved by the processor referring to instructions and information stored in the memory and executing arithmetic operations on a temporary memory.

### [Velocity brake]

As an example, the velocity brake control unit 123 activates the velocity brake by suppressing the velocity when the velocity of the walker 100 reaches a predetermined level or more. In this case, the velocity brake control unit 123 acquires the detected value from the velocity sensor 115 and monitors the detected value. When the velocity brake is activated, for example, the motor 105 generates braking force to suppress the rotational velocity of the rear wheels 13. This suppresses the velocity of the walker 100, enhancing safety.

### [Inclination brake]

As an example, the inclination brake control unit 125 activates the inclination brake when the road surface on which the walker 100 is traveling has a downward inclination of a predetermined angle or less. As another example, the inclination brake control unit 125 may produce inclination braking when the walker 100 continues to travel on an inclination of a predetermined angle or less for a predetermined distance. As another example, the inclination brake control unit 125 may produce inclination braking when the walker 100 continues to travel on an inclination of a predetermined angle or less for a predetermined time. In these cases, the brake control unit 125 acquires a detected value from the acceleration sensor 113 or the inclination sensor 117 and continuously monitors the acceleration. When the inclination brake is activated, for example, the motor 105 generates braking force to suppress the rotational velocity of the rear wheels 13. This suppresses the velocity of the walker 100, enhancing safety.

### [Fall brake]

As an example, the fall brake control unit 127 suppresses the velocity of the walker 100 when there is a high possibility that the user will fall and activates the fall brake. When the user falls while the walker 100 is traveling on level ground, the acceleration of the walker 100 tends to increase rapidly. Therefore, the fall brake control unit 127 activates the fall brake when the acceleration of the walker 100 reaches a predetermined threshold or more on the assumption that the user may fall.

The control unit 101 includes a threshold changing unit 131 configured to manage a threshold that is referred to by the fall brake control unit 127 and changes the threshold according to the situation.

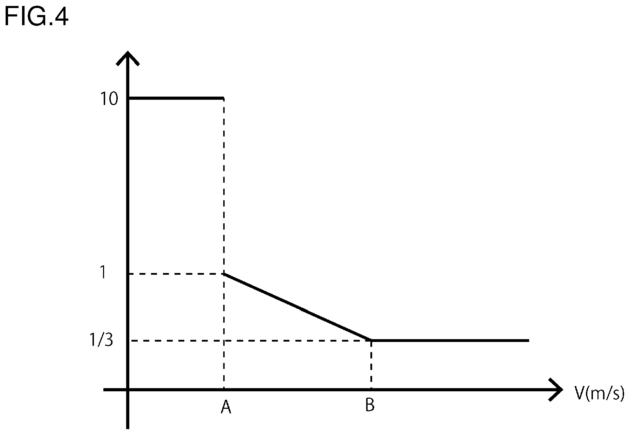

FIG. 4 is a graph showing the relationship between the threshold of the fall brake and the velocity. FIG. 4 shows the threshold of the acceleration in the vertical axis and shows the velocity of the walker 100 in the horizontal axis. As shown in FIG. 4, the threshold of the acceleration becomes relatively high when the current velocity of the walker 100 is low, and the threshold of the acceleration becomes relatively low when the current velocity of the walker 100 is high. In the example shown in the figure, the threshold of the acceleration is gradually reduced in a medium velocity region as the velocity increases. The threshold changing unit 131 refers to a detection value from the velocity sensor 115 and reads a threshold corresponding to the velocity that has been detected. The threshold changing unit 131 then sets the read threshold as a threshold for activating the fall brake. The threshold changing unit 131 continues the series of threshold changing processes at least while the walker 100 is moving forward.

A threshold in a low velocity region is set relatively high considering the acceleration when the user intentionally wishes rapid acceleration of the walker 100. Also, it can be considered that the acceleration of the walker 100 does not become so high and does not change much even when the user is about to fall while the walker 100 is traveling at a high speed. Therefore, a threshold in a high velocity region should be set relatively lower than that in the low velocity region. In the example shown in the figure, a region with a velocity less than a velocity A is defined as a low velocity region, a region with a velocity less than a velocity B is defined as a medium velocity region, and a region with the velocity B or more is defined as a high velocity region. Given that the threshold for the acceleration at the time of the velocity A is set to one, the threshold for the acceleration in the low velocity region with a velocity less than the velocity A is set to, for example, ten. In the medium velocity region, the threshold for the acceleration gradually decreases to 1/3 as the velocity increases. In the high velocity region, the threshold for the acceleration is set to 1/3.

In the example shown in the figure, the thresholds are substantially separated into three stages: a high velocity region; a medium velocity region; and a low velocity region. However, instead of separating the thresholds in stages in the high velocity region, the medium velocity region, and the low velocity region, the velocity and the thresholds may have a relationship expressed by a linear or quadratic function such that the thresholds decrease as the velocity increases. In the example above, the thresholds are separated into three stages. Alternatively, the thresholds may be separated into two stages: a threshold in a high velocity region; and a threshold in a low velocity region. In this case, the threshold changing unit 131 may perform, for example, two-step control of setting a threshold for the high velocity region during normal driving in advance and relatively increasing the threshold when the velocity is lower than a predetermined value. The threshold in the high velocity region and the threshold in the low velocity region are set to be constant in the example shown in the figure. Alternatively, the thresholds may be reduced gradually as the velocity increases in these regions. Further, a threshold for the acceleration may be inversely proportional to the velocity within each region.

In this way, the threshold for the acceleration for activating the fall brake can be changed based on the velocity at which the vehicle is traveling. This can improve the accuracy of detecting a fall at low and high velocities. Further, by making the threshold for the acceleration relatively high at the time of a low velocity, it is possible to suppress the activation of the fall brake when the user intentionally tries to accelerate. Also, the walker 100 can detect the possibility of a fall with high accuracy without using a distance measurement sensor. These effects do not preclude the installation of a supplementary distance measurement sensor on the walker 100 to further improve the accuracy of the detection of a fall.

### [Relationship between fall brake and other brakes]

The braking principle, i.e., a detected value when the braking force is generated by the motor 105, is different between the fall brake and other electric brakes. Therefore, for example, it is possible that conditions for activating the fall brake are met while the inclination brake is being activated. For example, if the inclination brake is being activated while the vehicle is traveling on a downward inclination and the user is about to fall in this condition, it is possible that there is small acceleration at the time of the fall because a deceleration force has already been generated by the inclination brake. For the same reason, there may be small acceleration when the user falls even when the velocity brake is in operation.

Therefore, if the braking force of motor 105 is being controlled by a braking principle different from the fall brake (at least one of the fall brake and the velocity brake in this example), the threshold changing unit 131 may change the threshold. For example, if the threshold for the acceleration at which the fall brake is activated is set to one, the threshold for the acceleration is changed to 1/3 while the braking force is being applied by a brake other than the fall brake. The threshold changing unit 131 detects the state of the inclination brake control unit 125 and the state of the velocity brake control unit 123 and detects whether or not inclination braking and velocity braking are being produced.

When the threshold changing unit 131 changes the threshold for the acceleration based on the velocity, the threshold changing unit 131 may correct the threshold for the acceleration while the braking force of the motor 105 is being controlled by a braking principle different from the fall brake. Correcting the threshold in this case is one specific means of changing the threshold and is included in changing the threshold. As an example, while the inclination brake is being activated, the threshold changing unit 131 corrects the threshold described in relation with FIG. 4 to 1/3 times the original value. Therefore, the threshold changing unit 131 sets the threshold in the low velocity region to 10/3 and the threshold in the high velocity region to 1/9 and gradually reduces the threshold in the medium velocity region from 1/3 to 1/9.

In this way, the accuracy of detecting a fall can be improved by changing or correcting the threshold while another brake with a braking principle different from that of the fall brake is in operation. When fall braking is produced while another brake with a braking principle different from that of the fall brake is in operation, control may be performed such that the total braking force of the fall brake and the braking force of the other brake become equal to the braking force obtained when the fall brake is activated alone.

### [Relationship between fall brake and assist control]

If the walker 100 has an assist function, it is possible that conditions for activating the fall brake are met while assist control is being performed. While the assist control is being performed, the total of the force for pushing the walker 100 applied by the user and the assist force of the motor 105 accelerate the walker 100. Therefore, while the assist control is being performed, the acceleration of the walker 100 tends to reach the threshold for the acceleration more easily than when the assist control is not being performed. Therefore, while the assist control unit 129 is performing the assist control, the threshold changing unit 131 may change the threshold. For example, given that the threshold for the acceleration at which the fall brake is activated is set to one, the threshold for the acceleration is changed to 1.3 while the assist control is being performed by the assist control unit 129. The threshold changing unit 131 detects the state of the assist control unit 129 and detects whether or not the assist control is being performed.

When the threshold changing unit 131 changes the threshold for the acceleration based on the velocity, the threshold changing unit 131 may correct the threshold for the acceleration while the assist control is being performed by the assist control unit 129. As an example, while the assist control is being performed, the threshold changing unit 131 corrects the threshold explained in relation with FIG. 4 to 1.3 times the original value. Therefore, the threshold changing unit 131 sets the threshold in the low velocity region to 13 and the threshold in the high velocity region to 1.3/3 and gradually reduces the threshold in the medium velocity region from 1.3 to 1.3/3.

In this way, the accuracy of detecting a fall can be improved by changing or correcting the threshold while the assist control be being performed. More specifically, the activation of the fall brake even when the user is not falling during the execution of the assist control can be suppressed.

### [Relationship between fall brake and pitch angle]

The threshold changing unit 131 may change the threshold according to the inclination of the road surface on which the walker 100 is traveling. For example, if the user is about to fall while the walker 100 is traveling on an upward inclination, it is possible that the acceleration of the walker 100 is difficult to increase due to the resistance of the upward inclination. In this case, it is difficult for the fall brake to be activated. In contrast, when the walker 100 is traveling on a downward inclination, the acceleration easily increases, and it is possible that the acceleration reaches a threshold even when the user is not falling. For example, when the walker 100 is traveling on an upward inclination, the user takes a forward leaning posture in order to put weight on the walker 100, and the position of the center of gravity of the user tends to move away from the walker 100. Also, the user tends to accelerate to push up the walker 100 at this time. In such a case, the fall brake may be activated frequently unless the threshold of the fall brake is set high. In contrast, when the walker 100 is traveling on a downward inclination, the user tends to bring the walker 100 closer to his/her body, and the walker 100 is unlikely to accelerate even when the user is about to fall. In this case, the detection of a fall may be delayed unless the threshold is set low. Therefore, the threshold changing unit 131 may change the threshold based on a detected value from the pitch angle sensor. For example, given that the threshold for the acceleration at which the fall brake is activated is set to one, the threshold for the acceleration is changed to 1/3 while the walker 100 is traveling on a downward inclination, and the threshold for the acceleration is changed to 1.3 while the walker 100 is traveling on an upward inclination. The threshold changing unit 131 determines whether or not there is an upward inclination or a downward inclination based on the detected value from the pitch angle sensor.

When the threshold changing unit 131 changes the threshold for the acceleration based on the velocity, the threshold changing unit 131 may correct the threshold for the acceleration during the traveling on an upward inclination or a downward inclination. As an example, while the walker 100 is traveling on a downward inclination, the threshold changing unit 131 corrects the threshold explained in relation with FIG. 4 to 1.3 times the original value. Therefore, the threshold changing unit 131 sets the threshold in the low velocity region to 13 and the threshold in the high velocity region to 1.3/3 and gradually reduces the threshold in the medium velocity region from 1.3 to 1.3/3. On the other hand, while the walker 100 is traveling on an upward inclination, the threshold changing unit 131 corrects the threshold explained in relation with FIG. 4 to 1/3 times the original value. Therefore, the threshold changing unit 131 sets the threshold in the low velocity region to 10/3 and the threshold in the high velocity region to 1/9 and gradually reduces the threshold in the medium velocity region from 1/3 to 1/9.

In this way, the accuracy of detecting a fall can be improved by changing or correcting the threshold based on the pitch angle. More specifically, the activation of the fall brake even when the user is not falling can be suppressed by lowering the threshold of the fall brake while the walker 100 is traveling on a downward inclination. Further, by increasing the threshold of the fall brake while the walker 100 is traveling on an upward inclination, a fall is more easily detected.

### [Relationship between fall brake and traveling resistance]

The threshold changing unit 131 may change the threshold according to the resistance of the road surface on which the walker 100 is traveling. For example, even when the user is about to fall while the walker 100 is traveling on a road surface with a high traveling resistance, it is possible that the acceleration is difficult to increase. In this case, it is difficult for the fall brake to be activated. Therefore, the threshold changing unit 131 may change the threshold based on an estimation result from the traveling resistance estimation unit 121. For example, given that the threshold for the acceleration at which the fall brake is activated is set to one, the threshold for the acceleration is changed to 1/3 while the walker 100 is traveling on a road surface with a high traveling resistance. In this case, it is sufficient if the traveling resistance can be detected in a binary manner, and the traveling resistance estimation unit 121 may have a simplified structure. When the traveling resistance estimation unit 121 with high accuracy of detecting a traveling resistance is used, the threshold changing unit 131 may lower the threshold for the acceleration as the traveling resistance becomes higher.

When the threshold changing unit 131 changes the threshold for the acceleration based on the velocity, the threshold changing unit 131 may correct the threshold for the acceleration during the traveling on a road surface with a high traveling resistance. As an example, while the walker 100 is traveling on a road surface with a high traveling resistance, the threshold changing unit 131 corrects the threshold explained in relation with FIG. 4 to 1/3 times the original value. Therefore, the threshold changing unit 131 sets the threshold in the low velocity region to 10/3 and the threshold in the high velocity region to 1/9 and gradually reduces the threshold in the medium velocity region from 1/3 to 1/9.

In this way, the accuracy of detecting a fall can be improved by changing or correcting the threshold based on the traveling resistance. More specifically, by lowering the threshold of the fall brake while the walker 100 is traveling on a road surface with a high traveling resistance, a fall is more easily detected.

As described above, the walker 100 can change the threshold for the acceleration based on the traveling velocity of the walker 100 to improve the accuracy of detecting a fall. This allows the walker 100 to activate the fall brake at an appropriate point in time.

Further, the threshold changing unit 131 can change the threshold based on the operation status of a brake other than the fall brake, the operation status of the assist control, the pitch angle, and the traveling resistance. When the threshold changing unit 131 changes the threshold based on the operation status of a brake other than the fall brake, the operation status of the assist control, the pitch angle, and the traveling resistance, the threshold changing unit 131 does not necessarily have a function of changing the threshold based on the velocity.

When the threshold changing unit 131 has a function of changing the threshold based on the velocity, the threshold changing unit 131 changes the threshold for the acceleration based on the velocity and further corrects the threshold for the acceleration based on the operation status of a brake other than the fall brake, the operation status of the assist control, the pitch angle, and the traveling resistance. Therefore, the fall brake control unit 127 controls the braking force of the fall brake based on the corrected threshold for the acceleration.

### [Relationship between fall brake and jerk]

In an embodiment where the threshold changing unit 131 changes the threshold for the acceleration according to the velocity, the fall brake control unit 127 may prevent the fall brake from being activated based on the jerk. For example, the user may want to intentionally accelerate the walker 100 in order to cross a pedestrian crossing. In such a case, it is undesirable that the jerk of the walker 100 reaches the threshold for the acceleration causing the fall brake to be activated.

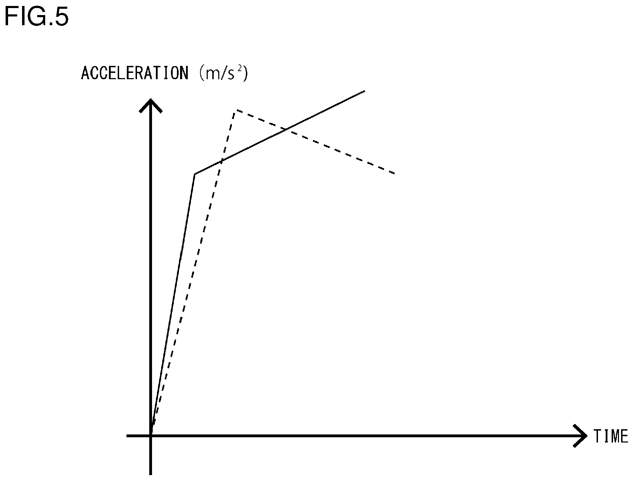

FIG. 5 is a graph showing change in acceleration over time when the user is about to fall. When the user intentionally accelerates the walker 100, the acceleration of the walker 100 tends to keep increasing as indicated by a solid line L1. When the user falls and the walker 100 accelerates, although the acceleration of the walker 100 increases as indicated by a dashed line L2, the acceleration of the walker 100 tends to slow down or decrease as the inclination angle of the user's body with respect to the vertical direction increases. Therefore, the fall brake control unit 127 refers to the jerk of the walker 100, and on condition that the jerk is less than or equal to the threshold for the jerk, the fall brake control unit 127 activates the fall brake when the acceleration reaches the threshold for the acceleration or more. To put it shortly, the value of the jerk of the walker 100 serves as the condition for activating the fall brake.

The fall brake control unit 127 performs second-order differentiation on a detected value from the velocity sensor 115 or differentiates a detected value from the acceleration sensor 113 to acquire the jerk. When the jerk sensor 119 is provided in the sensor group 103, a detected value from the jerk sensor 119 may also be obtained. The threshold for the jerk is a reference value for estimating the user's posture and state and can be set to, for example, a value of zero. If the threshold for the jerk is set to a value of zero, the acceleration is determined to be intentionally made by the user instead of a fall when the acceleration is increasing. If the jerk exceeds the threshold of zero, the fall brake control unit 127 does not activate the fall brake even when a detected value from the acceleration sensor 113 exceeds the threshold for the acceleration. On the contrary, if the acceleration is decreasing, the jerk is less than or equal to the threshold of zero. In this case, the fall brake control unit 127 activates the fall brake when a detected value from the acceleration sensor 113 exceeds the threshold for the acceleration. This suppresses the activation of the fall brake in response to acceleration intentionally made by the user.

### [Conditions for releasing fall brake]

Conditions for releasing the fall brake activated by any of the above methods are preferably as follows.

As an example, the fall brake control unit 127 may release the fall brake based on the elapsed time after the braking force is enhanced by the fall brake. In this case, the fall brake control unit 127 starts measuring the time when the braking force is enhanced by the fall brake, and the fall brake control unit 127 releases the fall brake and reduces the braking force after a threshold for a predetermined time (e.g. 0.2 seconds) has passed. The fall brake control unit 127 assumes that the user has regained his/her stance after the fall brake of the walker 100 is activated for a certain period of time. By releasing the fall brake at this point in time, the user can be prevented from starting to push the walker 100 with braking force that has been increased by the fall brake.

If the walker 100 has an assist function and the braking force can be increased by a reverse brake that reverses the motor 105, the fall brake control unit 127 may release the fall brake based on an even smaller threshold (e.g., 0.1 seconds). When the braking force is increased by the reverse brake, the walker 100 may move backward if the reverse brake is continued to be applied. Therefore, in this case, the fall brake control unit 127 releases the fall brake after 0.1 seconds has elapsed after the braking force is increased by the reverse brake.

As another example, the fall brake control unit 127 may release the fall brake if the velocity of the walker 100 is below a predetermined threshold for the velocity by a predetermined time after the braking force is enhanced by the fall brake. Determination of whether the predetermined time has elapsed can be made based on whether or not a predetermined threshold for the time (e.g., 0.2 seconds) has been exceeded. Further, the threshold changing unit 131 may change the threshold for time according to the velocity of the walker 100. For example, the threshold for time is lowered when the velocity of the walker 100 is low, and the threshold for time is increased when the velocity of the walker 100 is high. The fall brake control unit 127 determines that the user has regained his/her stance if the velocity of the walker 100 is below a certain velocity for a certain period of time. By releasing the fall brake at this point in time, the user can be prevented from starting to push the walker 100 with braking force that has been increased by the fall brake. Also, by determining the stance of the user based on the velocity of the walker 100, it is possible to suppress the release of the fall brake even when the user has not regained his/her stance. The fall brake control unit 127 may refer to the acceleration of the walker 100 instead of the velocity to determine the stance of the user.

As another example, a score may be assigned in advance to a condition that can be detected by the sensor group 103 and that is related to the user's stance such that the score is added each time the condition is achieved to release the fall brake when the total score reaches a certain value or more. For example, one point is added when the vehicle is in a slow slowdown state (e.g., traveling at a speed of 0.5 km/h or less) and ten points are added when the vehicle comes to a stop (e.g., traveling at a speed of 0.1 km/h or less), and twenty points are added when the vehicle is traveling is moving backward (e.g., traveling backward at a speed of 0.1 km/h or more). The fall brake control unit 127 adds points each time a condition is achieved based on detected values from the sensor group 103 and releases the fall brake when the total number of points reaches, for example, twenty points.

By setting such a condition for releasing the fall brake, the user can smoothly resume walking after regaining his/her stance.

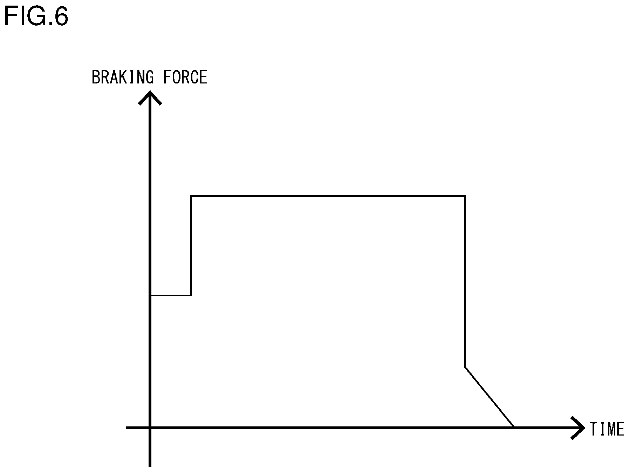

FIG. 6 is a graph showing the relationship between braking force and time when the fall brake is activated. When the fall brake is released as shown in FIG. 6, braking force caused by the motor 105 may be gradually weakened. In this case, the reverse brake can be combined with the regenerative brake. When activating the fall brake to support the user who is falling, a strong braking force is required. When activating the fall brake and while maintaining the fall brake, the fall brake control unit 127 reverses the motor 105 to produce reverse braking. After the condition for releasing the fall brake is achieved, the fall brake control unit 127 controls the motor 105 to switch the reverse brake to the regenerative brake. The fall brake control unit 127 then gradually reduces the braking force by the regenerative brake. This allows a strong braking force to be applied when preventing a fall and the braking force to be gradually reduced when the user resumes walking. In the example shown in the figure, the braking force is gradually reduced. Alternatively, the braking force may be weakened by reducing the amount of reduction per unit of time by a constant amount of change or may be weakened in stages. If the motor 105 does not have a reverse braking function, or if there is not enough electric power remaining in the battery 107 to produce reverse braking, the strength of the regenerative brake may be adjusted in stages.

Further, the regenerative brake may also be combined with reverse brake when the fall brake is activated. In this case, the regenerative brake is activated for a small amount of time when the braking force is increased by the fall brake. After that, the braking force is further increased by the reverse brake by rotating the motor 105 in reverse. This kind of control can prevent a sudden stop at the time of the activation of the fall brake. Further, gear damage etc., due to rapid deceleration can be prevented.

As described above, according to the walker 100, the fall brake can be activated at an appropriate point in time to enhance the safety of the user.

The above embodiments are illustrative, and each feature can be appropriately changed without departing from the scope of the present invention. In particular, although the above examples show multiple numerical values, each numerical value can be changed as appropriate based on the performance, function, etc., of a walker 100 to be used.

### [INDUSTRIAL APPLICABILITY]

The present invention has industrial applicability in the field of electrically controlled vehicles.

### [DESCRIPTION OF THE REFERENCE NUMERALS]

100 walker, 101 control unit, 103 sensor group, 105 motor, 113 acceleration sensor, 115 velocity sensor, 121 traveling resistance estimation unit, 123
velocity brake control unit, 125 inclination brake control unit, 127 fall brake control unit, 129 assist control unit, 131 threshold changing unit

## Claims

1. An electrically controlled vehicle comprising:
a brake configured to apply braking force to wheels provided on a body of the vehicle;
a velocity acquisition unit configured to acquire the velocity of the vehicle;
an acceleration acquisition unit configured to acquire the acceleration of the vehicle;
a brake control unit configured to electrically control the brake to enhance braking force when the acceleration acquired by the acceleration acquisition unit is greater than or equal to a threshold; and
a threshold changing unit configured to change the threshold according to the velocity acquired by the velocity acquisition unit.

2. The electrically controlled vehicle according to claim 1, wherein the threshold changing unit relatively increases the threshold when the velocity acquired by the velocity acquisition unit is low.

3. The electrically controlled vehicle according to claim 1 or 2, wherein the threshold changing unit relatively lowers the threshold when the velocity acquired by the velocity acquisition unit is high.

4. An electrically controlled vehicle comprising:
wheels provided on the body of the electric wheeled walking aid;
an acceleration acquisition unit configured to acquire the acceleration of the vehicle;
a first brake control unit configured to electrically control the brake to enhance braking force when the acceleration acquired by the acceleration acquisition unit is greater than or equal to a threshold; and
a second brake control unit configured to electrically control the brake to enhance braking force under a condition different from that for the first brake control unit; and
a threshold changing unit configured to change the threshold when the braking force of the brake is controlled by the second brake control unit.

5. An electrically controlled vehicle comprising:
wheels provided on a body of the vehicle;
an electric motor configured to apply assist force and braking force to the wheels;
an acceleration acquisition unit configured to acquire the acceleration of the vehicle;
an assist control unit configured to electrically control the electric motor to apply assist force;
a brake control unit configured to electrically control the electric motor to enhance braking force when the acceleration acquired by the acceleration acquisition unit is greater than or equal to a threshold; and
a threshold changing unit configured to change the threshold when the assist control unit is applying assist force to the electric motor.

6. An electrically controlled vehicle comprising:
a brake configured to apply braking force to wheels provided on the body of the vehicle;
an acceleration acquisition unit configured to acquire the acceleration of the vehicle;
a pitch angle acquisition unit configured to acquire the pitch angle of the vehicle;
a brake control unit configured to electrically control the brake to enhance the braking force when the acceleration acquired by the acceleration acquisition unit is greater than or equal to a predetermined threshold; and
a threshold changing unit configured to change the threshold according to the pitch angle acquired by the pitch angle acquisition unit.

7. An electrically controlled vehicle comprising:
a brake configured to apply braking force to wheels provided on the body of the vehicle;
an acceleration acquisition unit configured to acquire the acceleration of the vehicle;
a traveling resistance estimation unit configured to estimate the traveling resistance of a road surface on which the vehicle is traveling;
a brake control unit configured to electrically control the brake to enhance braking force when the acceleration acquired by the acceleration acquisition unit is greater than or equal to a predetermined threshold; and
a threshold changing unit configured to change the threshold according to the traveling resistance estimated by the traveling resistance estimation unit.

8. An electrically controlled vehicle comprising:
a brake configured to apply braking force to wheels provided on the body of the vehicle;
a velocity acquisition unit configured to acquire the velocity of the vehicle;
an acceleration acquisition unit configured to acquire the acceleration of the vehicle;
a jerk acquisition unit configured to acquire the jerk of the vehicle;
a brake control unit configured to electrically control the brake to enhance braking force when the jerk acquired by the jerk acquisition unit is less than or equal to a predetermined threshold and the acceleration acquired by the acceleration acquisition unit is greater than or equal to a predetermined threshold; and
a threshold changing unit configured to change the threshold for the acceleration according to the velocity acquired by the velocity acquisition unit.

9. An electrically controlled vehicle comprising:
a brake configured to apply braking force to wheels provided on the body of the vehicle;
a velocity acquisition unit configured to acquire the velocity of the vehicle;
an acceleration acquisition unit configured to acquire the acceleration of the vehicle;
a brake control unit configured to electrically control the brake to enhance braking force when the acceleration acquired by the acceleration acquisition unit is greater than or equal to a predetermined threshold and reduce braking force when the velocity acquired by the velocity acquisition unit is less than or equal to a predetermined threshold; and
a threshold changing unit configured to change the threshold for the acceleration according to the velocity acquired in the velocity acquisition unit.

10. The electrically controlled vehicle according to claim 9, wherein the brake control unit reduces braking force being applied to the brake when the velocity acquired by the velocity acquisition unit is less than or equal to the threshold for a predetermined period or longer.

11. The electrically controlled vehicle according to claim 9, wherein the threshold changing unit changes the predetermined period according to the velocity acquired by the velocity acquisition unit.

12. The electrically controlled vehicle according to any one of claims 7 through 9, wherein the brake control unit gradually lowers the brake force to reduce braking force of the brake when the velocity acquired by the velocity acquisition unit is less than or equal to the threshold for the velocity.
